# EUROPEAN PATENT SPECIFICATION

(11) **EP 4 355 712 B1**
(45) Date of publication and mention of the grant of the patent: **02.10.2024**
(21) Application number: 22790388.7
(22) Date of filing: 16.06.2022
(51) Int. Cl.: C04B 35/634, C04B 35/053, C04B 35/111, C04B 35/486, C08F 220/06, C08F 220/58, C04B 35/622

(54) **PREPARATION OF CERAMIC DOUGHS THROUGH COAGULATION, FOR GREEN MACHINING**
HERSTELLUNG VON KERAMISCHEN TEIGEN DURCH KOAGULATION, FÜR DIE GRÜNVERARBEITUNG
PRÉPARATION DE PÂTES CÉRAMIQUES PAR COAGULATION À DES FINS D'USINAGE EN VERT

(30) Priority: 18.06.2021 TR 202110024
(43) Date of publication of application: 24.04.2024
(73) Proprietor: Sabanci Universitesi, 34956 Istanbul (TR)
(72) Inventor: AKBULUT, Ozge, 34956 Istanbul (TR); AKHLAGHI BAGHOOJARI, Omid, 34956 Istanbul (TR); ZEMBEREKCI, Lyn, 34956 Istanbul (TR); DEM R, Gizem, 34956 Istanbul (TR)
(74) Representative: Genç Ilhan, Oznur
(86) International application number: PCT/TR2022/050596
(87) International publication number: WO 2022/265610

(56) References cited:
- US-A- 5 726 267
- US-B2- 10 954 377
- AVCI GOKAY ET AL: "A PCE-based rheology modifier allows machining of solid cast green bodies of alumina", CERAMICS INTERNATIONAL, ELSEVIER, AMSTERDAM, NL, vol. 42, no. 3, 12 November 2015 (2015-11-12), pages 3757 - 3761, XP029372189, ISSN: 0272-8842, DOI: 10.1016/J.CERAMINT.2015.11.004
- WAN WEI ET AL: "Low-toxic gelcasting of giant dielectric-constant CaCu3Ti4O12 ceramics from the molten salt powder", JOURNAL OF THE EUROPEAN CERAMIC SOCIETY, vol. 35, no. 13, November 2015 (2015-11-01), AMSTERDAM, NL, pages 3529 - 3534, XP055981872, ISSN: 0955-2219, DOI: 10.1016/j.jeurceramsoc.2015.05.034
- ZEMBEREKCI LYN ET AL: "Polymer Bridging Induced by a Single Additive Imparts Easy-To-Implement Green Machinability to Yttria-Stabilized Zirconia", ACS APPLIED POLYMER MATERIALS, vol. 3, no. 11, 20 October 2021 (2021-10-20), pages 5397 - 5404, XP055981437, ISSN: 2637-6105, DOI: 10.1021/acsapm.1c00605
- Q.-Q. HUANG, B. LIAO, B.-Y. JIANG, AND B. WANG: "Preparation and Characterization of AA-AMPS Copolymer Dispersant for Ceramic Powder", FINE CHEMICALS, vol. 30, no. 3, 2013, pages 339 - 343, XP009540611, ISSN: 1003-5214, Retrieved from the Internet <URL:https://www.cnki.net/kcms/doi/10.13550/j.jxhg.2013.03.010.html> [retrieved on 20221115], DOI: 10.13550/j.jxhg.2013.03.010

## Description

### Technical Field of the Invention

The present invention relates to ceramics science. In particular, the present invention relates to a mixture for being used as a dough in ceramics production.

### Background of the Invention

Green machining is a rapid and cost-effective method for near-net fabrication of ceramics. Compared to brittle sintered parts, ceramic doughs necessitate much lower forces, are less prone to cracking, and do not lead to tool wear.

Ceramic doughs that can withstand machining forces, are formed through cold isostatic pressing (CIP), gel casting, and protein coagulation.

CIP realizes machinable ceramic doughs by compacting ceramic particles and binders under pressure. This method requires elastomeric molds to hold the formulation and a set up to apply isostatic pressure, mostly via i) immersion of the mold into a water bath (wet bag) and pressurizing the system or ii) compressing the mold.

Gel casting eliminates the need for a mold and a setup, and generates a chemically or physically cross-linked polymer matrix around ceramic particles that is later removed during sintering. However, the toxicity of the monomer of choice, acrylamide, prevents the wide adaptation of this method. While other materials, such as cellulose derivatives, are suggested, there is still a need for mixing the particles and network-forming materials in ball milling and sustaining a controlled environment.

Protein coagulation requires the use of one or more binding materials, e.g., egg white and oval albumin.

All of these methods necessitate the optimization of a system composed of multiple chemicals (e.g. binders, dispersants, and coagulants) and various steps to produce ceramic doughs with uniform shrinking during sintering. It is clear that an easy-to-implement, benchtop process which does not require numerous steps, controlled environment, and special equipment is desired for embodying intricate ceramic objects especially for prototyping and creating complex structures.

Ceramic doughs formulated to date require utilization of high amounts of organic dispersants, polymeric binders, and defoamers to achieve a structure that can withstand machining. The presence of high organic content demands binder removal steps resulting in final shape inaccuracy due to large dimensional changes. In addition, non-homogeneous or non-uniform shrinking can be a problem due to the inhomogeneous dispersion of multiple chemicals.

Avci, G., Akhlaghi, O., Ustbas, B., Ozbay, C., Menceloglu, Y. Z., and Akbulut,O. ("A PCE-based rheology modifier allows machining of solid cast green bodies of alumina", Ceramics International, 42, 3757-3761 (2016)) disclose the preparation of alumina ceramic doughs through packing alumina particles effectively through the use of a grafted copolymer. The alumina used in said publication has a mean particle size of 200 nanometers. The packing enabled the machining of these green bodies, and an acceptable extent of robustness was observed in the green bodies. The green body is not malleable and is not perfectly easy-to machine and shape. It is to be noted that malleability is a concept which is different from packing.

WO 2004018185 A1 discloses the use of a glyoxal resin or a methyol carbamate as cross-linkable agents. The amount of these cross-linkable agents are within the range of 10-60 wt% compared to weight of particles. These systems use an aqueous bind that melts and flows upon heating, then cures, or re-solidifies upon cooling.

CN 105130402 A discloses the use of nano-clay as binder at a concentration of 10 to 15 wt%) and an organic additive at a concentration of 15 to 20 wt% for preparation of ceramic suspensions. The wetting agent in the formulation was used in addition to the dispersing agent.

CN 104725046 A discloses 3D rapid prototyping of alumina-zirconia-carbon ceramic powder materials. The respective method comprises the following steps: firstly, pretreating alumina-zirconia-carbon ceramic powder with N-(beta-aminoethyl)-gamma-amino propyl trimethoxy silane and stearic acid to obtain pre-treated alumina-zirconia-carbon ceramic powder; then addition of 60-70 wt.% of trichloroethane and 2-5 wt.% of bisphenol A polycarbonate into a reactor, stirring and dissolving, and adding 26-36 wt.% of the pre-treated alumina-zirconia-carbon ceramic powder, uniformly stirring and mixing, intensively stirring at constant temperature of 50 °C, refluxing to react for 5-7 hours, and drying by spraying to obtain the rapid prototyping alumina-zirconia-carbon ceramic powder material.

CN 104744050 A disclose the use of boron nitride powder material in rapid prototyping process. The method includes the following steps: pre-treatment of boron nitride powder employing fatty acid methyl ester polyoxyethylene ether to obtain pretreated boron nitride powder; addition of 5%-15% wt.% of N,N-dimethylformamide and 2-8% wt.% of nylon resin to a reactor, stirring, dissolving and addition of 80-90% of pretreated boron nitride powder, stirring evenly, transferring into a grinding miller, starting the grinding miller at the rotating speed of 200r/min, and grinding at a room temperature for 3-4 hours, so as to obtain the three-dimensional printing and rapid prototyping boron nitride powder material.

US 5,900,201 A discloses a process for fabricating ceramics having lower organic content, good green strength and are capable of being cast into complex shapes. The method comprises: adding binder having a molecular weight of 30,000 to 450,000 and continuing mixing; and adding a chemical initiator which drops the pH of the suspension over a time period of 10 to 60 minutes to induce gelation, stirring and transferring the suspension to a mold.

US 2004/0043204 A1 discloses a process which generally includes the steps of: combining a ceramic powder with a reagent to form a slurry; casting the slurry in a mold; curing the slurry in the mold at a temperature below about 100 °C to form a green component by a process including chemical reaction bonding of the powder under the influence of the reagent; and applying a heat treatment at a temperature below about 1,000 °C. to the green component. The heat treatment process dries, crystallizes, and fixes the component.

### Objects of the Invention

Primary object of the present invention is to overcome the abovementioned shortcomings of the prior art.

Another object of the present invention is to provide a highly malleable dough which enables green machining, even at room temperature without necessitating any elevated temperature. The term "malleability" is hereby considered to include the compressing of the dough into a mold, or to include the shaping of the dough that is arranged to have a certain thickness, using a sharp tool.

Another object of the present invention is to provide a mixture for use as a dough which does not necessitate any complex burnout step at sintering.

Another object of the present invention is to provide a mixture which enables reusability of dough scraps only with addition of water thereto.

### Summary of the Invention

The present invention proposes a mixture comprising a linear copolymer comprising acrylic acid and 2-acrylamido-2-methyl propane sulfonic acid, water and metal oxide ceramic nanoparticles with a mean particle size of up to 100nm, preferably up to 60 nm, more preferably within the range between 20 and 60 nm, e.g. 40 nm. Within the context of the present invention, the mean particle size is measured by scanning electron microscopy (SEM) and dynamic light scattering (DLS). The mixture can be used in formation of doughs which are suitable for green machining.

In the presence of the linear copolymer comprising acrylic acid and 2-acrylamido-2-methyl propane sulfonic acid and water, that the mean particle size of metal oxide ceramic nanoparticles in the mixture is up to 100 nm enables polymer bridging, thereby providing elasticity to a dough prepared from the mixture, such that the dough is rendered malleable even at moderate conditions such as room temperature. The extent of polymer bridging is even higher in the case where the mean particle size up to 60 nm, and still even higher in the case where the mean particle size is within the range between 20 and 60 nm, e.g., 40 nm.

The metal oxide ceramic particles can be for instance, yttria stabilized zirconia and/or magnesium oxide and/or alumina.

Optionally, a molar ratio between acrylic acid and 2-acrylamido-2-methyl propane sulfonic acid in the copolymer can be within the range between 0.8:1 and 1:0.8. In the mixture, the linear copolymer is present at a concentration within the range between 1 wt.% and 2 wt.%. In the mixture, the metal oxide ceramic (nano-) particles are present at a concentration within the range between 60 wt.% and 70 wt.%. The present invention further proposes a method for obtaining such mixture.

### Brief Description of the Figures

The figures, whose brief explanation is herewith provided, are solely intended for providing a better understanding of the present invention and are as such not intended to define the scope of protection or the context in which said scope is to be interpreted in the absence of the description.
Fig.1 shows a perspective view of an exemplary, comb-shaped flat body obtained in accordance with the present invention.
Fig.2 shows a perspective view of an exemplary, low aspect ratio cylindrical body obtained in accordance with the present invention.
Fig.3 shows a perspective view of another exemplary, low aspect ratio cylindrical body obtained in accordance with the present invention.
Fig.4 shows a perspective view of an exemplary, high aspect ratio cylindrical body obtained in accordance with the present invention.

### Detailed Description of the Invention

Referring to the figures briefly described above, the present invention proposes the use of a linear copolymer comprising acrylic acid (AA) and 2-acrylamido-2-methyl propane sulfonic acid (AMPS), as an additive in preparation of a mixture which comprises metal oxide ceramic particles (e.g., yttria stabilized zirconia (YSZ) and/or magnesium oxide and/or alumina) with a mean particle size of up to 100 nanometers. Such mean particle size enables the malleability of the dough, which is not available with a comparative dough which contains metal oxide ceramic particles (e.g. alumina) with a higher mean particle size, e.g. 200 nanometers.

Within the context of the present application, the mean particle size of the metal oxide ceramic nanoparticles can preferably be up to 60 nanometers, and more preferably within the range between 20 and 60 nanometers, e.g. 40 nm.

The mixture is suitable for use as a ceramic dough for rapid prototyping; and can be named as dough, putty, or aqueous suspension. With a low additive concentrations such as only 1-2 wt.% on the basis of total solid content in the mixture, a high metal oxide ceramic nanoparticles concentration of 60-70 wt.% is rendered available on the basis of total weight of the mixture according to the present invention.

The mixture according to the present invention comprises the following constituents: a linear copolymer comprising acrylic acid (AA) and 2-acrylamido-2-methyl propane sulfonic acid (AMPS), water and one or more metal oxide ceramic nanoparticles. Preferably, the molar ratio between AA and AMPS in the copolymer is within the range between 0.8:1 and 1:0.8. More preferably, the molar ratio between AA and AMPS in the copolymer is 1:1.

The linear copolymer comprising AA and AMPS is at a concentration within the range between 1 wt.% and 2 wt.% on the basis of the total weight of the mixture. The low concentration of the copolymer in the mixture eliminates the requirement of a burnout step which is a complex incineration process, at sintering of the dough. A green ceramic can be prototyped or formed from the mixture or dough according to the present invention.

The concentration of the metal oxide ceramic nanoparticles in the mixture is within the range between 60 wt.% and 70 wt.% on the basis of the total weight of the mixture.

The mixture according to the present invention comprises: the linear copolymer comprising AA and AMPS at a concentration within the range between 1 wt.% and 2 wt.% on the basis of the total weight of the mixture, metal oxide ceramic nanoparticles at a concentration within the range between 60 wt.% and 70 wt.% on the basis of the total weight of the mixture, and water in a complementary amount (i.e. in an amount in addition to all the other components, to bring the total composition constituting the mixture to 100 weight %).

The mixture according to the present invention enables reusability of dough scraps. The reuse the scraps necessitates a mere addition of water thereinto, preferably a replenishment of the copolymer content accordingly, and possibly a ball-milling step for achieving an enhanced uniformity in mixing; thereby re-obtaining the mixture according to the present invention, from the scraps. Thus, the mixture according to the present invention is recyclable.

The mixture as a system functions over polymer bridging, which can be formulated as polymer chain being adsorbed to a plurality of particles do flocculate the of said particles in the mixture. This technical effect brings elasticity to the dough. The technical effect of polymer bridging distinguishes from earlier PCE-based copolymers in which dense-packaging were also available to an extent. The mixture shows a viscosity increment, contrary to earlier PCE-based systems which show a viscosity drop. The elasticity brought by means of polymer bridging results in that the dough is malleable at room temperature.

The present invention further proposes a method of preparing a mixture for use in prototyping or forming a green ceramic; the method includes mixing a linear copolymer comprising AA and AMPS, water and one or more metal oxide ceramic nanoparticles. The method results in obtainment of an aqueous mixture of the copolymer and metal oxide ceramic nanoparticles.

Preferably, the method includes the arrangement of the molar ratio between AA and AMPS in the copolymer to a value within the range between 0.8:1 and 1:0.8. More preferably, the method includes the arrangement of the molar ratio between AA and AMPS in the copolymer to 1:1.

The method includes the arrangement of concentration of the linear copolymer comprising AA and AMPS to the range between 1 wt.% and 2 wt.% on the basis of the total weight of the mixture. The low concentration of the copolymer in the mixture eliminates the requirement of a burnout step at sintering of the dough. A green ceramic can be prototyped or formed from the mixture or dough according to the present invention.

The method includes the arrangement of the concentration of metal oxide ceramic nanoparticles in the mixture to the range between 60 wt.% and 70 wt.% on the basis of the total weight of the mixture.

The method includes the arrangement of the concentrations of the linear copolymer and metal oxide ceramic nanoparticles in the mixture such that: the linear copolymer comprising AA and AMPS is at a concentration within the range between 1 wt.% and 2 wt.% on the basis of the total weight of the mixture, metal oxide ceramic nanoparticles is at a concentration within the range between 60 wt.% and 70 wt.% on the basis of the total weight of the mixture, and the mixture contains water in a complementary amount (i.e. in an amount in addition to all the other components, to bring the total composition constituting the mixture to 100 weight %).

The mixture provides an uniform coagulation without necessitating any further organic additives as coagulating agent. The coagulation results in a malleable ceramic dough that can be machined at room temperature, even in the absence of such further additives. The minimization of additives alleviates the need for a complex burnout step during sintering; thus the known disadvantages of burnout step are avoided. Thus, the present invention makes use of coagulation in preparation of ceramic doughs for rapid prototyping. The dough can be used in formationof green bodies, which can be shaped and machined (in the sense of green machining) at room temperature, e.g. by milling and laser cutting.

In other words, the present invention provides the use of a copolymer to even act as single additive for the production of a malleable dough that can be shaped further e.g. through machining and laser-cutting. The dough can be thus considered as a metal oxide ceramic nanoparticles- based mixture.

The copolymer includes, or preferably consists of AA and AMPS.

Metal oxide ceramic nanoparticles (such as those including yttria-stabilized zirconia) are useful in biomedicine, dentistry, solid oxide fuel cells, and thermocouple shielding due to its exceptional mechanical and thermal properties. In a preferred embodiment of the mixture according to the present invention, the copolymer at a concentration 1 wt. % can be used as a single additive to bridge metal oxide ceramic nanoparticles at a concentration of e.g. 65 wt.%. The mixture as an aqueous suspension can be used as a dough, and coagulation can be achieved in a uniform manner. This coagulation rendered a malleable ceramic dough that can be machined at room temperature.

### Examples:

### Example 1: Preparation of the mixture and formation of green bodies therefrom

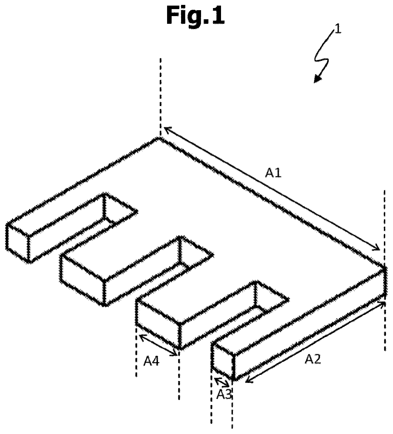

On the basis of total weight of the mixture, the linear copolymer (as a single copolymer without any further organic ingredient as coagulating agent) at 1 wt. % is utilized for bridging metal oxide ceramic nanoparticles (here: YSZ and/or MgO and/or alumina nanoparticles with an exemplary, preferable mean particle size of 40 nm) of 65 wt. % in the mixture, thereby forming an aqueous suspension. The mixture as a system was thus coagulated in a uniform manner. The coagulation rendered a malleable ceramic dough that can be machined at room temperature. Referring now the Fig.1 to Fig.4, it is demonstrated that the fabrication of complex ceramic objects (green bodies) with dense packing of polygonal (here: hexagonal and triangular) and cylindrical holes, comb shapes, and through holes holes in high aspect ratio bodies is enabled. A green machining is applied onto said green bodies; then the the green bodies were dried, followed by a sintering step. Several dimensional measurements were taken from the objects as noted in the following examples.

### Example 1:

Fig.1 shows a perspective view of an exemplary, comb-shaped flat (i.e., low-height) first body (1) obtained by green machining of the mixture according to the present invention. The first body (1) is provided with a plurality of fine indentations with high-precision angular edges. To emphasize the extent of machinability, several dimensional features of the first body (1) are referred to as A1, A2, A3 and A4. Upon drying of the first body (1), said dimensions corresponded to 30, 18, 2.5 and 5 millimeters, respectively. Upon a consecutive sintering, the dimensions of the first body (1) corresponded to 21.8, 14.4, 2 and 4 millimeters, respectively.

### Example 2:

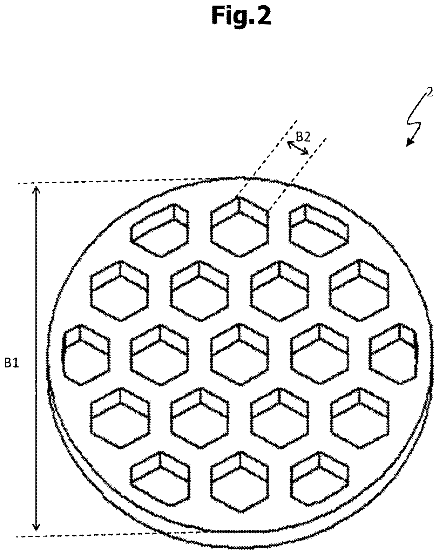

Fig.2 shows a perspective view of an exemplary, low aspect ratio cylindrical second body (2) obtained by green machining of the mixture according to the present invention. The second body (2) is provided with a plurality of through holes in the form of hexagonal prisms. To emphasize the extent of machinability, several dimensional features of the second body (2) are referred to as B1 and B2. Upon drying of the second body (2), said dimensions corresponded to 24.44 and 3.78 millimeters, respectively. Upon a consecutive sintering, the dimensions of the second body (2) corresponded to 17.18 and 2.76 millimeters, respectively.

### Example 3:

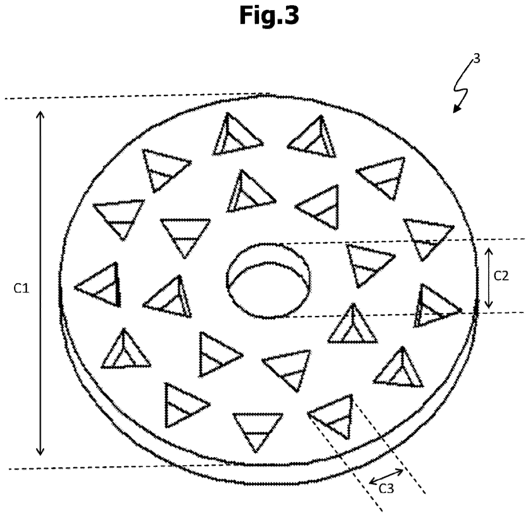

Fig.3 shows a perspective view of another exemplary, low aspect ratio cylindrical third body (3) obtained by green machining of the mixture according to the present invention. The third body (3) is provided with a through hole in the form of a cylinder, and a plurality of further through holes in the form of triangular prisms. To emphasize the extent of machinability, several dimensional features of the third body (3) are referred to as C1, C2 and C3. Upon drying of the third body (3), said dimensions corresponded to 20.05, 3.53 and 1.86 millimeters, respectively. Upon a consecutive sintering, the dimensions of the third body (3) corresponded to 13.85, 2.41 and 1.22 millimeters, respectively.

### Example 4:

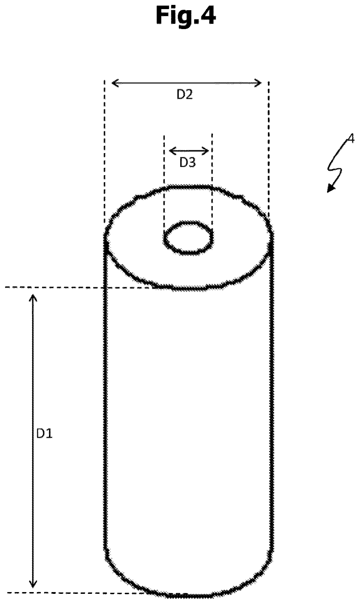

Fig.4 shows a perspective view of an exemplary, high aspect ratio cylindrical fourth body (4) obtained by green machining of the mixture according to the present invention. The fourth body (4) is provided with a cylindrical through hole. To emphasize the extent of machinability, several dimensional features of the fourth body (4) are referred to as D1, D2 and D3. Upon drying of the fourth body (4), said dimensions corresponded to 50, 10 and 2 millimeters, respectively. Upon a consecutive sintering, the dimensions of the fourth body (4) corresponded to 39, 7.8 and 1.55 millimeters, respectively.

The bodies visualized in Fig.1 to Fig.4 are machined at room temperature at their respective green states. It is proven that a high resolution in machining can be performed without damaging the green body, even at the fine details of desired geometries. Green states of all of the exemplary bodies are formed from the mixture according to the present invention, by machining at room temperature. Notwithstanding the detail level such as high aspect ratios, low thicknesses and sharp corners, a high extent of fidelity has been achieved: the green bodies are mechanically not damaged at machining. Dried state of the green body shown in Fig.4 can support its own weight even when pending on a wire.

The use of a single monomer at a minimum amount instead of multiple additives, alleviates the need for complex burnout processes during sintering. All of the ceramic objects obtained from green bodies formed from the mixture had isotropic dimensional shrinkage of 22% and a density of 6.05 (theoretical density = 6.07 g/cm3). To our knowledge, controlled coagulation of ceramic particles through a single additive below 2 wt. % has not been demonstrated in the fabrication of ceramics before and we believe this method will enable a myriad of opportunities for rapid-prototyping of ceramics.

### Reference signs

- 1: first body
- 2: second body
- 3: third body
- 4: fourth body
- A1: a first dimensional feature of the first body
- A2: a second dimensional feature of the first body
- A3: a third dimensional feature of the first body
- A4: a fourth dimensional feature of the first body
- B1: a first dimensional feature of the second body
- B2: a second dimensional feature of the second body
- B3: a third dimensional feature of the second body
- C1: a first dimensional feature of the third body
- C2: a second dimensional feature of the third body
- C3: a third dimensional feature of the third body
- D1: a first dimensional feature of the fourth body
- D2: a second dimensional feature of the fourth body
- D3: a third dimensional feature of the fourth body
- D4: a fourth dimensional feature of the fourth body

## Claims

1. A mixture comprising water, a linear copolymer comprising acrylic acid and 2-acrylamido-2-methyl propane sulfonic acid; and one or more metal oxide ceramic nanoparticles with a mean particle size of up to 100 nanometers; wherein the linear copolymer is at a concentration within the range between 1 wt.% and 2 wt.% on the basis of the total weight of the mixture, and the one or more metal oxide ceramic nanoparticles are at a concentration within the range between 60 wt.% and 70 wt.% on the basis of the total weight of the mixture, and water is in a complementary amount.

2. The mixture according to claim 1, wherein said mean particle size is up to 60 nanometers.

3. The mixture according to any of claims 1 or 2, wherein said mean particle size is within the range between 20 nanometers and 60 nanometers.

4. The mixture according to any of claims 1 to 3, wherein the metal oxide ceramic nanoparticles are selected from the list consisting of yttria stabilized zirconia, magnesium oxide, alumina and mixtures thereof.

5. The mixture according to any of claims 1 to 4, wherein the molar ratio between acrylic acid and 2-acrylamido-2-methyl propane sulfonic acid in the copolymer is within the range between 0.8:1 and 1:0.8.

6. A method of preparing a mixture for use in prototyping or forming a green ceramic; the method includes mixing a linear copolymer comprising acrylic acid and 2-acrylamido-2-methyl propane sulfonic acid, water and one or more metal oxide ceramic nanoparticles with a mean particle size of up to 100 nanometers, wherein the linear copolymer is at a concentration within the range between 1 wt.% and 2 wt.% on the basis of the total weight of the mixture, and the one or more metal oxide ceramic nanoparticles are at a concentration within the range between 60 wt.% and 70 wt.% on the basis of the total weight of the mixture, and water is in a complementary amount.

7. The method according to claim 6, wherein the method includes mixing a linear copolymer comprising acrylic acid and 2-acrylamido-2-methyl propane sulfonic acid, water and one or more metal oxide ceramic nanoparticles with a mean particle size of up to 60 nanometers, preferably within the range between 20 and 60 nanometers.

8. The method according to any of claims 6 or 7, wherein the method includes a selection of the metal oxide ceramic nanoparticles from the list consisting of yttria stabilized zirconia, magnesium oxide, alumina and mixtures thereof.

9. The method according to any of claims 6 to 8, wherein the method includes the arrangement of the molar ratio between acrylic acid and 2-acrylamido-2-methyl propane sulfonic acid in the copolymer to a value within the range between 0.8:1 and 1:0.8.

## Patentansprüche

1. Gemisch enthaltend Wasser, ein lineares Copolymer enthaltend Acrylsäure und 2-Acrylamido-2-methylpropansulfonsäure; und Nanopartikel aus einem oder mehreren Metalloxidkeramiken mit einer mittleren Teilchengröße von bis zu 100 Nanometern; wobei das lineare Copolymer in einer Konzentration im Bereich zwischen 1 Gew.% und 2 Gew.-%, bezogen auf das Gesamtgewicht des Gemisches, vorliegt und Nanopartikel aus einem oder mehreren Metalloxidkeramiken in einer Konzentration im Bereich zwischen 60 Gew.-% und 70 Gew.-%, bezogen auf das Gesamtgewicht des Gemisches, vorliegen und Wasser in einer komplementären Menge vorliegt.

2. Gemisch nach Anspruch 1, wobei die mittlere Teilchengröße bis zu 60 Nanometer beträgt.

3. Gemisch nach einem der Ansprüche 1 oder 2, wobei die mittlere Teilchengröße im Bereich zwischen 20 Nanometern und 60 Nanometern liegt.

4. Gemisch nach einem der Ansprüche 1 bis 3, wobei die Metalloxidkeramik-Nanopartikel aus der Gruppe ausgewählt sind, die aus Yttriumoxid-stabilisiertem Zirkoniumdioxid, Magnesiumoxid, Aluminiumoxid und Mischungen davon besteht.

5. Gemisch nach einem der Ansprüche 1 bis 4, wobei das molare Verhältnis zwischen Acrylsäure und 2-Acrylamido-2-methylpropansulfonsäure im Copolymer im Bereich zwischen 0,8:1 und 1:0,8 liegt.

6. Verfahren zur Herstellung einer Mischung zur Verwendung beim Prototyping oder bei der Bildung einer Rohkeramik, wobei das Verfahren das Mischen eines linearen Copolymers enthaltend das Acrylsäure und 2-Acrylamido-2-methylpropansulfonsäure mit Wasser und Nanopartikeln aus einem oder mehreren Metalloxidkeramiken mit einer mittleren Teilchengröße von bis zu 100 Nanometern umfasst, wobei das lineare Copolymer in einer Konzentration im Bereich zwischen 1 Gew.% und 2 Gew.-%, bezogen auf das Gesamtgewicht des Gemisches, vorliegt und Nanopartikel aus einem oder mehreren Metalloxidkeramiken in einer Konzentration im Bereich zwischen 60 Gew.-% und 70 Gew.-%, bezogen auf das Gesamtgewicht des Gemisches, vorliegen und Wasser in einer komplementären Menge vorliegt.

7. Verfahren nach Anspruch 6, wobei das Verfahren das Mischen eines linearen Copolymers enthaltend das Acrylsäure und 2-Acrylamido-2-methylpropansulfonsäure mit Wasser und Nanopartikeln aus einem oder mehreren Metalloxidkeramiken mit einer mittleren Teilchengröße von bis zu 60 Nanometern, vorzugsweise im Bereich zwischen 20 und 60 Nanometern, umfasst.

8. Verfahren nach einem der Ansprüche 6 oder 7, wobei das Verfahren eine Auswahl der Metalloxidkeramik-Nanopartikel aus der Gruppe bestehend aus Yttriumoxid-stabilisiertem Zirkoniumdioxid, Magnesiumoxid, Aluminiumoxid und Mischungen davon umfasst.

9. Verfahren nach einem der Ansprüche 6 bis 8, wobei das Verfahren die Einstellung des molaren Verhältnisses zwischen Acrylsäure und 2-Acrylamido-2-methylpropansulfonsäure im Copolymer auf einen Wert im Bereich zwischen 0,8:1 und 1:0,8 umfasst.

## Revendications

1. - Mélange comprenant de l'eau, un copolymère linéaire comprenant de l'acide acrylique et de l'acide 2-acrylamido-2-méthyl propane sulfonique ; et une ou plusieurs nanoparticules céramiques d'oxyde métallique ayant une taille moyenne de particule allant jusqu'à 100 nanomètres ; dans lequel le copolymère linéaire est à une concentration dans la plage entre 1 % en poids et 2 % en poids sur la base du poids total du mélange, et la ou les nanoparticules céramiques d'oxyde métallique sont à une concentration dans la plage entre 60 % en poids et 70 % en poids sur la base du poids total du mélange, et l'eau est en quantité complémentaire.

2. - Mélange selon la revendication 1, dans lequel ladite taille moyenne des particules va jusqu'à 60 nanomètres.

3. - Mélange selon l'une quelconque des revendications 1 ou 2, dans lequel ladite taille moyenne de particule est dans la plage entre 20 nanomètres et 60 nanomètres.

4. - Mélange selon l'une quelconque des revendications 1 à 3, dans lequel les nanoparticules céramiques d'oxyde métallique sont choisies dans la liste consistant en la zircone stabilisée à l'oxyde d'yttrium, l'oxyde de magnésium, l'alumine et leurs mélanges.

5. - Mélange selon l'une quelconque des revendications 1 à 4, dans lequel le rapport molaire entre l'acide acrylique et l'acide 2-acrylamido-2-méthyl propane sulfonique dans le copolymère est dans la plage entre 0,8:1 et 1:0,8.

6. - Procédé de préparation d'un mélange destiné à être utilisé dans le prototypage ou la formation d'une céramique verte ; le procédé comprend le mélange d'un copolymère linéaire comprenant de l'acide acrylique et de l'acide 2-acrylamido-2-méthyl propane sulfonique, d'eau et d'une ou plusieurs nanoparticules céramiques d'oxyde métallique ayant une taille moyenne de particule allant jusqu'à 100 nanomètres, dans lequel le copolymère linéaire est à une concentration dans la plage entre 1 % en poids et 2 % en poids sur la base du poids total du mélange, et la ou les nanoparticules céramiques d'oxyde métallique sont à une concentration dans la plage entre 60 % en poids et 70 % en poids sur la base du poids total du mélange, et l'eau est en quantité complémentaire.

7. - Procédé selon la revendication 6, dans lequel le procédé comprend le mélange d'un copolymère linéaire comprenant de l'acide acrylique et de l'acide 2-acrylamido-2-méthyl propane sulfonique, d'eau et d'une ou plusieurs nanoparticules céramiques d'oxyde métallique avec une taille moyenne de particule allant jusqu'à 60 nanomètres, de préférence dans la plage entre 20 et 60 nanomètres.

8. - Procédé selon l'une quelconque des revendications 6 ou 7, dans lequel le procédé comprend une sélection des nanoparticules céramiques d'oxyde métallique dans la liste consistant en la zircone stabilisée à l'oxyde d'yttrium, l'oxyde de magnésium, l'alumine et leurs mélanges.

9. - Procédé selon l'une quelconque des revendications 6 à 8, dans lequel le procédé comprend l'arrangement du rapport molaire entre l'acide acrylique et l'acide 2-acrylamido-2-méthyl propane sulfonique dans le copolymère à une valeur dans la plage entre 0,8:1 et 1:0,8.
